# FASCICULE DE BREVET EUROPEEN

(11) **EP 4 256 820 B1**
(45) Date de publication et mention de la délivrance du brevet: **01.10.2025**
(21) Numéro de dépôt: 21830719.7
(22) Date de dépôt: 30.11.2021
(51) Int. Cl.: H04W 4/02, G01S 13/74

(54) **PROCÉDÉ ET SYSTÈME DE CORRÉLATION D'ÉVÉNEMENTS**
VERFAHREN UND SYSTEM ZUR EREIGNISKORRELATION
METHOD AND SYSTEM FOR CORRELATING EVENTS

(30) Priorité: 01.12.2020 FR 2012461
(43) Date de publication de la demande: 11.10.2023
(73) Titulaire: Orange, 92130 Issy-les-Moulineaux (FR)
(72) Inventeur: PHAN HUY, Dinh Thuy, 92326 CHÂTILLON CEDEX (FR)
(74) Mandataire: Cabinet Beau de Loménie
(86) Numéro de dépôt international: PCT/FR2021/052146
(87) Numéro de publication internationale: WO 2022/117946

(56) Documents cités:
- WO-A1-2016/195545
- GB-A- 2 561 257
- US-A1- 2005 006 466
- US-A1- 2018 375 703
- US-B1- 10 763 990

## Description

### Technique antérieure

La présente invention appartient au domaine général des télécommunications. Elle concerne plus particulièrement un procédé et un système pour déterminer si des événements qui se produisent au moment où des sources émettent des flux de données dans un réseau de télécommunications sont corrélés ou non.

Dans le présent document, un « événement » est un événement capté par un dispositif appelé « source » et représenté par un flux de données transmis par la source dans un réseau de télécommunications.

Par exemple, lorsqu'une source filme une voiture qui passe devant un bâtiment et transmet en direct sur un réseau un flux vidéo représentant cette scène, il peut être considéré que le flux vidéo représente l'événement constitué par le passage de la voiture devant le bâtiment au moment de la prise de vue.

Selon un deuxième exemple, lorsqu'un téléphone transmet un flux audio sur un réseau cellulaire, un élément sonore, par exemple le bruit d'une explosion, peut être considéré comme représentatif d'un événement, à savoir celui de l'explosion qui se serait produite à proximité du téléphone au moment de l'appel.

De façon plus générale, dans le contexte de cette invention, lorsqu'une source émet un flux de données, on fait l'hypothèse que cette émission se fait au cours d'un événement défini de façon spatio-temporelle dans laquelle :
- la dimension spatiale est une localisation de la source du flux de données ; et
- la dimension temporelle est un instant d'émission du flux de données par la source.

Autrement dit, étant donné une pluralité de flux de données émis dans un réseau, l'invention vise à déterminer si ces flux sont :
- corrélés spatialement, autrement dit s'ils ont été émis par une ou plusieurs sources situées dans des endroits voisins ;
- corrélés temporellement, autrement dit s'ils ont été émis par des sources de façon sensiblement simultanée ;
- corrélés spatialement et temporellement, ou
- corrélés ni spatialement, ni temporellement.

L'invention trouve de nombreuses applications. Elle permet par exemple de déterminer si l'émission d'un flux vidéo par une caméra de vidéo-surveillance lors d'un cambriolage (premier évènement au sens de l'invention) et l'émission d'un appel téléphonique (deuxième évènement au sens de l'invention) par le terminal de télécommunication d'un individu sont colocalisées (corrélation spatiale) et simultanées (corrélation temporelle).

Le document R. B. Ghormade, S. Magar and B. Joshi, "Discovery of Neighbors in Wireless networks with Energy Efficient Approach" 2016 IEEE 6th International Conference on Advanced Computing (IACC), Bhimavaram, 2016, pp. 610-612" propose des mécanismes pour determiner si deux terminaux sont voisins.

Selon ces mécanismes, les terminaux émettent un signal de balise prédéfini, et lorsqu'un terminal détecte ce signal de balise émis par un autre terminal, il en déduit que cet autre terminal est dans son voisinage.

Un inconvénient majeur de ces techniques est qu'elles nécessitent l'émission d'un signal de balise et donc une consommation d'énergie supplémentaire par les terminaux pour ce besoin.

Le document US 2018/375703 A1 décrit des dispositifs et des systèmes utilisant une communication par rétrodiffusion pour générer des transmissions conformément à des protocoles de communication sans fil.

Le document US 10 763 990 B1 décrit des mécanismes de modulation de rétrodiffusion ambiante.

Le document WO 2016/195545 A1 décrit des flux de données émises par des sources comprenant des informations temporelles ou géographiques.

### Exposé de l'invention

La présente invention a pour objectif de remédier à tout ou partie des inconvénients de l'art antérieur, notamment ceux exposés ci-avant.

A cet effet, l'invention concerne un procédé de corrélation d'évènements, ce procédé comportant des étapes de :
- réception d'une pluralité de flux de données, chacun desdits flux ayant été émis par une source et comportant des données représentatives d'un événement acquis par la source au moment de ladite émission et un marqueur représentatif de la rétrodiffusion dudit flux de données par un dispositif transmetteur ; et
- détermination d'une corrélation spatiale et/ou temporelle desdits événements à partir desdits marqueurs.

Corrélativement, l'invention concerne un système de corrélation d'évènements comportant :
- au moins un module de réception configuré pour recevoir une pluralité de flux de données, chacun desdits flux ayant été émis par une source et comportant des données représentatives d'un événement acquis par la source au moment de cette émission et un marqueur représentatif de la rétrodiffusion dudit flux de données par un dispositif transmetteur ; et
- un module de corrélation configuré pour déterminer une corrélation spatiale et/ou temporelle desdits événements à partir desdits marqueurs.

Ainsi, et d'une façon générale, l'invention propose de déterminer si des flux de données ont été émis sensiblement simultanément et/ou par des sources voisines en analysant des marqueurs introduits dans ces flux de données par rétrodiffusion.

Contrairement aux techniques de l'art antérieur précitées, les sources émettrices d'un flux de données n'ont pas besoin d'émettre un signal de balise pour se signaler à leurs voisins. Elles ne font aucun traitement et ne consomment donc aucune ressource à cet effet.

De façon plus générale et très avantageuse, conformément aux mécanismes de communication par rétrodiffusion ambiante, aucun signal radiofréquence n'est émis pour marquer les flux de données émis par les sources, le dispositif transmetteur exploitant le signal émis par une source pour communiquer le marqueur au module de réception.

L'énergie nécessaire à la mise en œuvre de l'invention est donc essentiellement celle nécessaire à l'analyse des marqueurs pour déterminer la corrélation spatiale et/ou temporelle des événements.

Dans un mode particulier de réalisation:
- le marqueur représentatif de la rétrodiffusion de chacun desdits flux de données comporte un identifiant du dispositif transmetteur ayant rétrodiffusé ledit flux de données ; et :
- ladite corrélation est une corrélation spatiale.

Conformément à ce mode de réalisation, on considère que des événements sont corrélés spatialement si des signaux émis par des sources au cours de ces événements et rétrodiffusés comportent des marqueurs identiques.

Ce mode de réalisation de l'invention est avantageux car il peut être mis en œuvre en utilisant des dispositifs transmetteurs conformes à l'état de la technique, dès lors que ces dispositifs transmetteurs marquent le signal rétrodiffusé avec leurs identifiants propres.

Dans un mode particulier de réalisation, le dispositif transmetteur comporte un module de géolocalisation de ce dispositif et une horloge, et un module de marquage du flux de données véhiculé par le signal ambiant rétrodiffusé par le dispositif transmetteur avec un marqueur représentatif d'une localisation dudit dispositif transmetteur ou d'un instant de rétrodiffusion dudit flux de données par ledit dispositif transmetteur, dans lequel ladite localisation est obtenue à partir dudit module de géolocalisation, et ledit instant de rétrodiffusion est obtenu à partir de ladite horloge.

Dans un mode particulier de réalisation:
- le marqueur représentatif de la rétrodiffusion de chacun desdits flux de données comporte une information temporelle représentative de l'instant de rétrodiffusion dudit flux de données ; et :
- ladite corrélation est une corrélation temporelle.

Conformément à ce mode de réalisation, on considère que des événements sont corrélés temporellement si des signaux émis par des sources au cours de ces événements et rétrodiffusés comportent des marqueurs représentant des instants de rétrodiffusion sensiblement simultanés, par exemple espacés d'une durée inférieure à un seuil.

Dans un mode particulier de réalisation :
- le marqueur représentatif de la rétrodiffusion de chacun desdits flux de données comporte une information spatiale représentative de la localisation du dispositif transmetteur ayant rétrodiffusé ledit flux de données ; et :
- ladite corrélation est une corrélation spatiale.

Conformément à ce mode de réalisation, on considère que des événements sont corrélés spatialement si des signaux émis par des sources au cours de ces événements et rétrodiffusés comportent des marqueurs représentant des localisations voisines, par exemple séparées d'une distance inférieure à un seuil.

Dans un mode particulier de réalisation, le système de corrélation d'évènements est incorporé dans un dispositif de télécommunication, par exemple une station de base ou un terminal.

Dans ce mode de réalisation de l'invention, les sources peuvent être des terminaux et les signaux émis par ces terminaux peuvent être des signaux émis dans le sens montant et comportant des données destinées à la station de base.

Dans un mode de réalisation de l'invention, le système est réparti sur plusieurs dispositifs. Ce système comporte:
- au moins un dispositif de télécommunication comportant ledit au moins un module de réception ; et
- un dispositif de corrélation, distinct dudit au moins un dispositif de réception, et comportant ledit module de corrélation.

Les dispositifs de télécommunication peuvent être des stations de base recevant des signaux émis par les terminaux, au moins certains de ces signaux étant rétrodiffusés par des dispositifs transmetteurs. Le dispositif de corrélation qui analyse ces marqueurs pour détecter d'éventuels événements corrélés peut être centralisé dans le réseau.

Selon un troisième aspect, l'invention concerne un programme d'ordinateur comportant des instructions pour la mise en œuvre du procédé de corrélation d'événements selon l'invention lorsque ledit programme est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un quatrième aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 représente schématiquement, dans son environnement, un mode particulier de réalisation d'un système de corrélation d'événements selon un premier mode de réalisation de l'invention;
[Fig. 2] la figure 2 représente schématiquement un exemple d'architecture matérielle d'un dispositif transmetteur conforme à un mode particulier de réalisation de l'invention ;
[Fig. 3] la figure 3 représente schématiquement un exemple d'architecture matérielle d'un dispositif de corrélation conforme à un mode particulier de réalisation de l'invention ;
[Fig. 4] la figure 4 représente, sous forme d'ordinogramme, les principales étapes d'un procédé de marquage et d'un procédé de corrélation d'événements conforme à un exemple particulier de mise en œuvre de l'invention ;
[Fig. 5] la figure 5 représente un système de corrélation d'événements selon un autre mode de réalisation de l'invention;
[Fig. 6] la figure 6 représente un système de corrélation d'événements selon un autre mode de réalisation de l'invention;
[Fig. 7] la figure 7 représente un système de corrélation d'événements selon un autre mode de réalisation de l'invention;
[Fig. 8] la figure 8 représente un système de corrélation d'événements selon un autre mode de réalisation de l'invention ; et
[Fig. 9] la figure 9 représente un système de corrélation d'événements selon un autre mode de réalisation de l'invention.

### Description des modes de réalisation

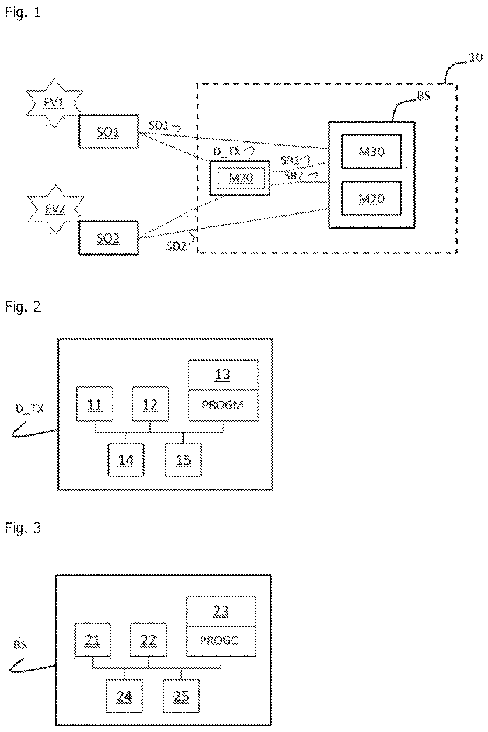

La figure 1 représente schématiquement, dans son environnement, un mode particulier de réalisation d'un système 10 de corrélation d'événements selon l'invention.

Dans l'exemple de la figure 1, l'environnement du système 10 de corrélation comporte deux sources SO1, SO2.

Chaque source émettrice SO1, SO2 est configurée pour émettre, selon une fréquence d'émission F_E comprise dans une bande fréquentielle donnée dite « bande d'émission », un signal radioélectrique dit « signal ambiant ». L'émission du signal ambiant s'effectue par exemple de manière permanente ou bien de manière récurrente.

Par « signal radioélectrique », on fait référence ici à une onde électromagnétique se propageant par des moyens non filaires, dont les fréquences sont comprises dans le spectre traditionnel des ondes radioélectriques (quelques hertz à plusieurs centaines de gigahertz).

A titre d'exemple nullement limitatif, un signal ambiant est un signal de téléphonie mobile 4G dans la bande d'émission [811 MHz, 821 MHz]. La source SO1 ou SO2 peut être constituée par un terminal de télécommunications, par exemple un téléphone cellulaire.

Il convient toutefois de préciser que l'invention reste applicable à d'autres types de signaux radioélectriques, comme par exemple un signal de téléphonie mobile autre que 4G (par exemple 2G, 3G, 5G), un signal Wi-Fi, un signal WiMax, un signal DVB-T, etc. D'une manière générale, aucune limitation n'est attachée au signal radio ambiant pouvant être considéré dans le cadre de la présente invention. En conséquence, il convient de noter que le nombre d'antennes équipant une source SO1/SO2 ne constitue pas un facteur limitant de l'invention.

Dans l'exemple de la figure 1, le système 10 de corrélation d'événements comporte un dispositif de télécommunication constitué par une station de base BS. Ce dispositif de télécommunication comporte un module de réception M30 configuré pour communiquer avec un dispositif transmetteur D_TX par rétrodiffusion ambiante à partir d'un signal ambiant émis par la source SO1 ou SO2. Il est à noter que, conformément à l'invention, le dispositif de télécommunication BS est distinct des sources SO1, SO2.

De manière connue en soi, la communication par rétrodiffusion ambiante consiste en l'exploitation du signal ambiant, par le dispositif transmetteur D_TX pour envoyer des données vers un module de réception M30 . Plus particulièrement, le dispositif transmetteur D_TX (respectivement le module de réception M30 est configuré pour effectuer, à partir du signal ambiant (respectivement à partir du signal rétrodiffusé), des traitements visant à rétrodiffuser ledit signal ambiant (respectivement visant à décoder ledit signal rétrodiffusé), en mettant en œuvre un procédé de rétrodiffusion (respectivement un procédé de décodage).

A cet effet, le dispositif transmetteur D_TX (respectivement le module de réception M30) comporte par exemple un ou plusieurs processeurs et des moyens de mémorisation (disque dur magnétique, mémoire électronique, disque optique, etc.) dans lesquels sont mémorisés des données et un programme d'ordinateur, sous la forme d'un ensemble d'instructions de code de programme à exécuter pour mettre en œuvre le procédé de rétrodiffusion (respectivement le procédé de décodage).

Alternativement ou en complément, le dispositif transmetteur D_TX (respectivement le module de réception M30) comporte également un ou des circuits logiques programmables, de type FPGA, PLD, etc., et / ou circuits intégrés spécialisés (ASIC), et / ou un ensemble de composants électroniques discrets, etc. adaptés à mettre en œuvre le procédé de rétrodiffusion (respectivement le procédé de décodage).

En d'autres termes, le dispositif transmetteur D_TX (respectivement le module de réception M30) comporte un ensemble de moyens configurés de façon logicielle (programme d'ordinateur spécifique) et / ou matérielle (FPGA, PLD, ASIC, etc.) pour mettre en œuvre le procédé de rétrodiffusion (respectivement le procédé de décodage).

Les aspects spécifiques concernant l'émission de données par rétrodiffusion à destination du module de réception M30, ainsi que ceux concernant les techniques de décodage mises en œuvre par ce dernier, sont connus de l'homme du métier et sortent du cadre de la présente invention. Par conséquent, ils ne sont pas détaillés ici plus avant.

Dans le présent mode de réalisation, le dispositif transmetteur D_TX est équipé d'une antenne (non représentée sur les figures) configurée, de manière connue en soi, pour recevoir le signal ambiant mais aussi le rétrodiffuser vers le dispositif de télécommunication BS. Il convient de noter qu'aucune limitation n'est attachée au nombre d'antennes pouvant équiper le dispositif transmetteur D_TX.

En pratique, le dispositif transmetteur D_TX est associé à une bande fréquentielle, dite « bande d'influence », qui correspond à la bande fréquentielle dans laquelle l'antenne est apte à recevoir / rétrodiffuser des signaux. Lorsque ladite bande d'influence est incluse dans la bande d'émission associée à la source S01, S02 du signal ambiant, elle est qualifiée de « bande de travail ». Par « bande de travail », on fait référence ici au fait que le dispositif transmetteur D_TX est compatible avec la source SO1 ou SO2 du signal ambiant, à savoir donc que la rétrodiffusion peut être effectuée pour toute fréquence comprise dans ladite bande de travail.

Rien n'exclut cependant de considérer une bande d'influence qui ne soit pas incluse dans la bande d'émission. Il est néanmoins implicite que pour que le dispositif transmetteur D_TX soit en mesure de rétrodiffuser le signal ambiant, ladite bande d'influence et ladite bande d'émission doivent être d'intersection non vide, la bande de travail correspondant dès lors à cette intersection.

Le dispositif transmetteur D_TX est également associé à des états de fonctionnement, à savoir au moins un état dit de « rétrodiffusion » (le dispositif transmetteur rétrodiffuse le signal ambiant) ainsi qu'un état contraire dit de « non-rétrodiffusion » (le dispositif transmetteur ne rétrodiffuse pas le signal ambiant, ou, encore dit autrement, est « transparent » au signal ambiant). Ces états correspondent à des configurations dans lesquelles ladite antenne est connectée à des impédances distinctes. Il s'agit typiquement d'une impédance positive, voire nulle, pour un état de rétrodiffusion, et à l'inverse une impédance théoriquement infinie pour l'état de non-rétrodiffusion.

Pour la suite de la description, on considère de manière nullement limitative que le dispositif transmetteur D_TX est associé à un seul état de rétrodiffusion ainsi qu'un seul état de non-rétrodiffusion. L'invention reste néanmoins applicable dans le cas d'un dispositif transmetteur D_TX associé à une pluralité d'états de rétrodiffusion, ces états étant distincts entre eux en ce qu'ils sont mis en œuvre grâce à des impédances respectives distinctes entre elles (l'état de non-rétrodiffusion reste quant à lui unique). Les développements qui suivent sont généralisables sans difficulté par l'homme du métier au cas où une pluralité d'état de rétrodiffusion est considérée.

Dans un mode de réalisation, le dispositif transmetteur D_TX comporte un module de géolocalisation configuré pour obtenir une localisation courante LOC_i de ce dispositif.

Dans un mode de réalisation, le dispositif transmetteur D_TX comporte une horloge configurée pour obtenir une date et un instant courants.

Dans le présent mode de réalisation, le dispositif de télécommunication BS est équipé d'une antenne de réception (non représentée sur les figures) configurée pour recevoir des signaux dans ladite bande de travail.

Il convient cependant de noter qu'aucune limitation n'est attachée au nombre d'antennes pouvant équiper le dispositif de télécommunication BS.

Le module 30 de réception du dispositif de télécommunication BS reçoit des signaux non rétrodiffusés tels qu'émis par la source SO1, SO2 et des signaux émis par les sources SO1, SO2 et rétrodiffusés par le dispositif transmetteur D_TX.

Dans la présente description, on adopte la notation suivante :
- SDi désigne un signal émis par la source SOi reçu par le module de réception M30 mais sans rétrodiffusion. Ces signaux sont représentés en traits pleins ; et
- SRi désigne un signal émis par la source SOi reçu par le module de réception M30 et rétrodiffusé le dispositif de transmission D_TX. Ces signaux sont représentés en traits pointillés.

Dans la suite de la description, et par souci de simplification on utilise la même notation SDi pour désigner le signal SDi émis par la source SOi et le flux de données véhiculé par ce signal SDi.

De même, on utilise la même notation SRi pour désigner le signal rétrodiffusé par le dispositif transmetteur D_TX et le flux de données véhiculé par ce signal.

Dans le mode de réalisation décrit ici, le dispositif transmetteur D_TX comporte un module M20 de marquage du flux de données rétrodiffusé SRi avec un marqueur TAGi représentatif de cette rétrodiffusion.

Dans le mode de réalisation de la figure 1, le marqueur TAGi comporte au moins un élément parmi :
(i) un identifiant du dispositif transmetteur D_TX ;
(ii) une localisation du dispositif transmetteur D_TX obtenue à partir du module de géolocalisation ;
(iii) un instant de rétrodiffusion du signal SRi par le dispositif transmetteur D_TX obtenue à parir de l'horloge précitée.

Comme mentionné ci-avant, le module de réception M30 est configuré pour décoder le signal rétrodiffusé par le dispositif transmetteur D_TX. A cet effet, il est connu que le décodage du signal rétrodiffusé ne peut être mis en œuvre que si la variation de puissance électromagnétique, dite « écart de puissance » E_P, reçue par le module de réception M30 selon que le dispositif transmetteur D_TX est dans un état de rétrodiffusion ou de non-rétrodiffusion est, en valeur absolue, supérieure à un seuil déterminé, dit « seuil de puissance » S_P. Autrement dit, ledit seuil de puissance S_P détermine la valeur de l'écart de puissance E_P à partir de laquelle le module de réception M30 est apte à décoder un signal émis par une source SO1, SO2 et rétrodiffusé par le dispositif transmetteur D_TX.

Ledit seuil de puissance S_P est par exemple défini à partir d'un rapport signal sur bruit « SNR » (acronyme de l'expression anglo-saxonne « Signal to Noise Radio ») côté dispositif récepteur D_RX ou bien encore, selon une variante, à partir d'un rapport signal sur bruit plus interférence « SINR » (acronyme de l'expression anglo-saxonne « Signal to Interference plus Noise Radio ») côté dispositif récepteur D_RX. Rien n'exclut toutefois de considérer encore d'autres métriques pour définir ledit seuil de puissance, comme par exemple un taux d'erreur de décodage « BER » (acronyme de l'expression anglo-saxonne « Bit Error Rate »). Concernant ces aspects, l'homme du métier peut se référer au document : « Real-Time Ambient Backscatter Demonstration », K. Rachedi, D. T. Phan-Huy, N. Selmene, A. Ourir, M. Gautier, A. Gati, A. Galindo-Serrano, R. Fara, J. De Rosny, IEEE INFOCOM 2019 Posters and Demos, 1st May 2019, Paris, France.

Conformément à l'invention, on considère que le signal émis par une source SO1, SO2 est émis au cours d'un événement défini de façon spatio-temporelle dans laquelle :
- la dimension spatiale est une localisation de la source du flux de données ; et
- la dimension temporelle est un instant d'émission du flux de données par la source.

Dans le mode de réalisation de la figure 1, le dispositif de télécommunication BS, constitué dans cet exemple par une station de base, comporte un module M70 de corrélation configuré pour déterminer, à partir des marqueurs TAGi, TAGj compris dans des flux de données rétrodiffusés, s'il existe ou non une corrélation spatiale et/ou temporelle entre les événements EVi, EVj au cours desquels ces flux ont été émis par leurs sources respectives.

Dans le mode de réalisation décrit ici, si le marqueur TAGi du flux SRi rétrodiffusé par un dispositif transmetteur D_TX comporte l'identifiant de ce dispositif transmetteur D_TX, le module de corrélation M70 détermine que des événements EVi, EVj sont corrélés spatialement si des signaux émis par des sources au cours de ces événements et rétrodiffusés comportent des marqueurs TAGi, TAGj identiques.

Dans le mode de réalisation décrit ici, si le marqueur TAGi du flux SRi rétrodiffusé par un dispositif transmetteur D_TX comporte un instant de rétrodiffusion du signal SRi par le dispositif transmetteur D_TX, le module de corrélation M70 détermine que des événements EVi, EVj sont corrélés temporellement si des signaux émis par des sources au cours de ces événements et rétrodiffusés comportent des marqueurs TAGi, TAGj représentant des instants de rétrodiffusion sensiblement simultanés, par exemple espacés d'une durée inférieure à un seuil.

Dans le mode de réalisation décrit ici, si le marqueur TAGi du flux SRi rétrodiffusé par un dispositif transmetteur D_TX comporte une localisation de ce dispositif transmetteur D_TX, le module de corrélation M70 détermine que des événements EVi, EVj sont corrélés spatialement si des signaux émis par des sources au cours de ces événements et rétrodiffusés comportent des marqueurs TAGi, TAGj représentant des localisations voisines, par exemple séparées d'une distance inférieure à un seuil.

Dans le mode de réalisation décrit ici, si le marqueur TAGi du flux SRi rétrodiffusé par un dispositif transmetteur D_TX comporte une combinaison de l'instant de rétrodiffusion du signal SRi par le dispositif transmetteur D_TX avec l'identifiant du dispositif transmetteur D_TX, le module de corrélation M70 détermine que des événements EVi, EVj sont corrélés spatialement et temporellement si des signaux émis par des sources au cours de ces événements et rétrodiffusés comportent des marqueurs TAGi, TAGj représentant un même identifiant et des instants de rétrodiffusion sensiblement simultanés, par exemple espacés d'une durée inférieure à un seuil.

Dans le mode de réalisation décrit ici, si le marqueur TAGi du flux SRi rétrodiffusé par un dispositif transmetteur D_TX comporte une combinaison de l'instant de rétrodiffusion du signal SRi par le dispositif transmetteur D_TX avec la localisation du dispositif transmetteur D_TX, le module de corrélation M70 détermine que des événements EVi, EVj sont corrélés spatialement et temporellement si des signaux émis par des sources au cours de ces événements et rétrodiffusés comportent des marqueurs TAGi, TAGj représentant des localisations voisines et des instants de rétrodiffusion sensiblement simultanés.

La figure 2 représente schématiquement un exemple d'architecture matérielle d'un dispositif transmetteur D_TX conforme à un mode particulier de réalisation de l'invention.

Dans le mode de réalisation décrit ici, le dispositif transmetteur D_TX dispose de l'architecture matérielle d'un ordinateur. Il comporte, notamment, un processeur 11, une mémoire vive 12, une mémoire morte 13 et une mémoire non volatile 14.

La mémoire morte 13 constitue un support d'enregistrement conforme à l'invention, lisible par le processeur 11 et sur lequel est enregistré un programme d'ordinateur PROGM conforme à l'invention, comportant des instructions pour l'exécution des étapes du procédé de marquage selon l'invention. Le programme PROGM définit des modules fonctionnels du dispositif transmetteur D_TX, qui s'appuient ou commandent les éléments matériels 12 à 14 du dispositif transmetteur D_TX cités précédemment, et notamment un module de marquage d'un flux de données avec un marqueur TAGi tel que décrit précédemment.

La figure 3 représente schématiquement un exemple d'architecture matérielle d'un dispositif de télécommunication BS conforme à un mode particulier de réalisation de l'invention.

Dans le mode de réalisation décrit ici, le dispositif de télécommunication BS dispose de l'architecture matérielle d'un ordinateur. Il comporte, notamment, un processeur 21, une mémoire vive 22, une mémoire morte 23 et une mémoire non volatile 24.

La mémoire morte 23 constitue un support d'enregistrement conforme à l'invention, lisible par le processeur 21 et sur lequel est enregistré un programme d'ordinateur PROGC conforme à l'invention, comportant des instructions pour l'exécution des étapes du procédé de corrélation d'événements selon l'invention. Le programme PROGC définit des modules fonctionnels du dispositif de télécommunication BS, qui s'appuient ou commandent les éléments matériels 22 à 24 du dispositif de télécommunication BS cités précédemment, et notamment :
- un module de réception M30 configuré pour recevoir une pluralité de flux de données, chacun de ces flux ayant été émis par une source émettrice au cours d'un événement et comportant un marqueur représentatif de la rétrodiffusion de ce flux par un dispositif transmetteur; et
- un module M70 de corrélation configuré pour déterminer une corrélation spatiale et/ou temporelle de ces événements à partir desdits marqueurs.

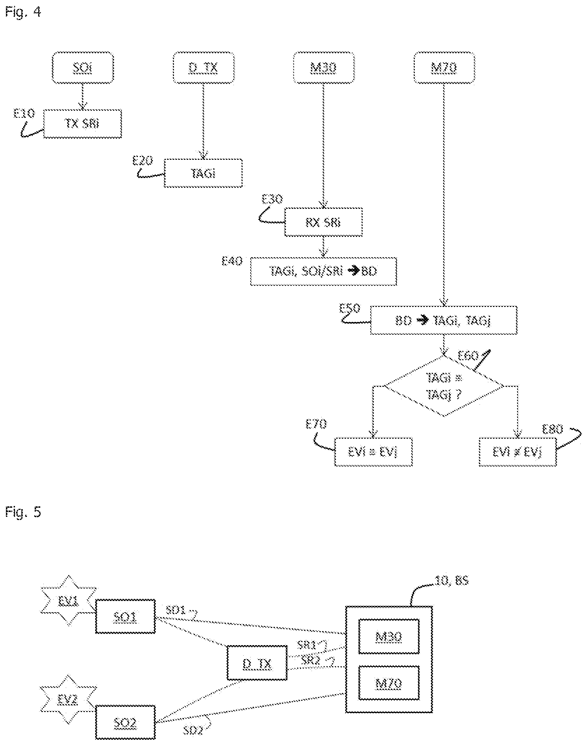

La figure 4 représente, sous forme d'ordinogramme, un procédé de marquage et un procédé de corrélation d'évènements conformes à des modes particuliers de réalisation de l'invention.

Tel qu'illustré par la figure 4, une source SOi émet un flux de données SDi au cours d'une étape E10.

Au cours d'une étape E20, un dispositif transmetteur D_TX rétrodiffuse ce flux en le marquant le flux rétrodiffusé Sri avec un marqueur TAGi représentatif de la rétrodiffusion de ce flux par ce dispositif transmetteur.

Dans le mode de réalisation décrit ici, le marqueur TAGi comporte au moins un élément parmi :
(i) un identifiant du dispositif transmetteur D_TX ;
(ii) une localisation du dispositif transmetteur D_TX ;
(iii) un instant de rétrodiffusion du signal SRi par le dispositif transmetteur D_TX.

Un module de réception M30 est configuré pour recevoir, au cours d'une étape E30, le flux SRi rétrodiffusé par le dispositif transmetteur D_TX.

Dans le mode de réalisation décrit ici, au cours d'une étape E40, le module de réception M30 enregistre dans une base de données BD un enregistrement comportant le marqueur TAGi et au moins une information parmi :
- l'identifiant de la source SOi du flux de données ; ou
- les données du flux de données SRi.

La base de données BD comporte de tels enregistrements pour différents flux de données rétrodiffusés SRi, SRj.

Au cours d'une étape E50, un module de corrélation M70 obtient des marqueurs TAGi, TAGj correspondant à différents flux de données rétrodiffusés SRi, SRj.

Au cours d'une étape E60, le module de corrélation M70 compare des marqueurs TAGi, TAGj pour déterminer s'il existe ou non une corrélation spatiale et/ou une corrélation temporelle entre les événements EVi, EVj au cours desquels ces flux ont été émis par leurs sources respectives.

Dans le mode de réalisation décrit ici :
- si le marqueur TAGi, TAGj comporte l'identifiant du dispositif transmetteur D_TX qui a rétrodiffusé le flux, le module de corrélation M70 détermine au cours d'une étape E70 que les événements EVi, EVj sont corrélés spatialement si les marqueurs TAGi, TAGj sont identiques ;
- si le marqueur TAGi, TAGj comporte un instant de rétrodiffusion du flux, le module de corrélation M70 détermine au cours de cette étape E70, que les événements EVi, EVj sont corrélés temporellement si ces marqueurs TAGi, TAGj représentent des instants de rétrodiffusion sensiblement simultanés, par exemple espacés d'une durée inférieure à un seuil ;
- si la marqueur TAGi, TAGj comporte une localisation du dispositif transmetteur D_TX, le module de corrélation M70 détermine au cours de cette étape E70, que les événements EVi, EVj sont corrélés temporellement si ces marqueurs TAGi, TAGj représentent des localisations voisines, par exemple séparées d'une distance inférieure à un seuil ;
- si le marqueur TAGi, TAGj comporte une combinaison de l'instant de rétrodiffusion du signal SRi par un dispositif transmetteur D_TX avec l'identifiant de ce dispositif transmetteur D_TX, le module de corrélation M70 détermine au cours de cette étape E70 que les événements EVi, EVj sont corrélés spatialement et temporellement si ces marqueurs TAGi, TAGj représentent un même identifiant et des instants de rétrodiffusion sensiblement simultanés ;
- si le marqueur TAGi, TAGj comporte une combinaison de l'instant de rétrodiffusion du signal par un dispositif transmetteur D_TX avec la localisation de ce dispositif transmetteur D_TX, le module de corrélation M70 détermine au cours de cette étape E70 que les événements EVi, EVj sont corrélés spatialement et temporellement si ces marqueurs TAGi, TAGj représentent des localisations voisines et des instants de rétrodiffusion sensiblement simultanés.

Dans le cas contraire, le module de corrélation M70 détermine au cours d'une étape E80 que les événements EVi, EVj ne sont corrélés ni spatialement ni temporellement.

Dans l'exemple de la figure 1 décrit précédemment, le système 10 de corrélation comporte un dispositif de télécommunication constitué par une station de base BS et un dispositif transmetteur D_TX.

Comme mentionné précédemment, l'invention peut être mise en œuvre avec des dispositifs transmetteurs D_TX configurés pour marquer le signal rétrodiffusé avec leur identifiant propre.

L'invention peut en particulier être mise en œuvre avec des dispositifs transmetteurs D_TX conformes à l'état de la technique et configurés pour marquer le signal rétrodiffusé avec leur identifiant propre.

Dans ce mode de réalisation, et comme représenté par exemple à la figure 5, le système de corrélation peut être incorporé dans un dispositif de télécommunication, par exemple une station de base BS.

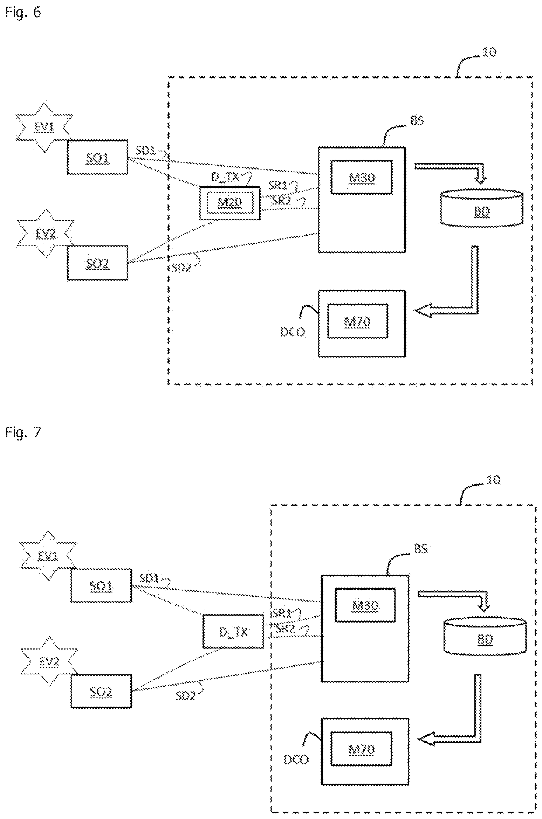

Le système de corrélation de la figure 6 diffère de celui de la figure 1 en ce qu'il comporte :
- au moins un dispositif de télécommunication BS (par exemple une station de base) comportant le module de réception M30 ; et
- un dispositif de corrélation DCO, distinct du dispositif de réception, et comportant le module M70 de corrélation.

Ainsi, dans ce mode de réalisation, la base de données BD peut être alimentée par plusieurs stations de base, les enregistrements de la base de données BD étant analysés par un même dispositif de corrélation DCO pour déterminer si des événements sont ou non corrélés.

Dans ce mode de réalisation notamment, les dispositifs de télécommunication (stations de base) peuvent ajouter dans l'enregistrement de la base de données l'instant auquel ils reçoivent un flux de données rétrodiffusé.

Ainsi, si le dispositif transmetteur D_TX marque le signal rétrodiffusé avec son identifiant ou avec son information de localisation, mais sans marquer le flux avec une information temporelle, le dispositif de corrélation peut utiliser l'instant de réception du flux rétrodiffusé par la station de base pour corréler les événements temporellement, si les stations de base sont synchronisées entre elles.

Le système de corrélation de la figure 7 diffère de celui de la figure 6 en ce qu'il utilise des dispositifs transmetteurs D_TX conformes à l'état de la technique et configurés pour marquer le signal rétrodiffusé avec leur identifiant propre.

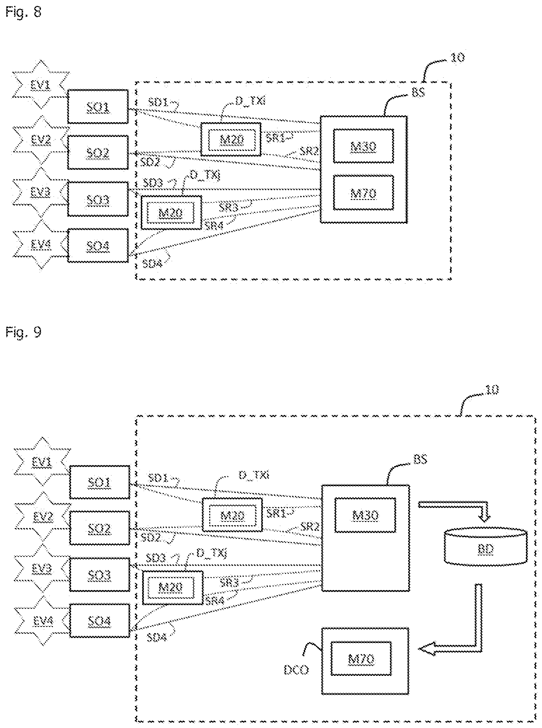

Le système de corrélation de la figure 8 est identique à celui de la figure 1 mais il comporte une pluralité de dispositifs transmetteurs D_TXi, D_TXj (seulement deux étant représentés pour ne pas surcharger la figure).

Le dispositif de télécommunication BS (par exemple une station de base) reçoit des signaux rétrodiffusés de dispositifs transmetteurs D_TXi, D_TXj, par exemple les signaux SR1, SR2 de D_TXi et les signaux SR3, SR4 de D_TXj.

Si les dispositifs transmetteurs D_TXi, D_TXj marquent les flux qu'ils rétrodiffusent avec une information spatiale représentative de leur localisation, le dispositif de télécommunication peut déterminer si les événements au cours desquels ces flux ont été diffusés par leurs sources sont corrélés spatialement.

Si les dispositifs transmetteurs D_TXi, D_TXj marquent les flux qu'ils rétrodiffusent avec une information temporelle représentative de l'instant auquel ils ont rétrodiffusé le flux, le dispositif de télécommunication peut déterminer si les événements au cours desquels ces flux ont été diffusés par leurs sources sont corrélés temporellement. Il faut pour cela que les dispositifs transmetteurs D_TXi, D_TXj soient synchronisés entre eux.

Le système de la figure 9 est identique à celui de la figure 8 sauf en ce que les modules de réception M30 et de corrélation M70 sont incorporés dans deux dispositifs distincts.

Comme dans le cas de la figure 6, la base de données BD peut être alimentée par plusieurs stations de base, les enregistrements de la base de données BD étant analysés par un même dispositif de corrélation DCO pour déterminer si des événements sont ou non corrélés.

## Revendications

1. Procédé de corrélation d'évènements (EVi, EVj) comportant des étapes de :
- réception (E30) d'une pluralité de flux de données (SRi, SRj), chacun desdits flux (SRi) ayant été émis (E10) par une source (SOi) et comportant des données représentatives d'un événement (EVi) acquis par ladite source (SOi) au moment de ladite émission et un marqueur (TAGi) représentatif de la rétrodiffusion (E20) dudit flux de données (SRi) par un dispositif transmetteur (D_TXi) ; et
- détermination (E70) d'une corrélation spatiale et/ou temporelle desdits événements (EVi, EVj) à partir desdits marqueurs (TAGi, TAGj).

2. Procédé de corrélation d'évènements (EVi, EVj) selon la revendication 1 **caractérisé en ce que** :
- le marqueur (TAGi) représentatif de la rétrodiffusion de chacun (TAGi) desdits flux de données (SRi, SRj) comporte un identifiant (IDi) du dispositif transmetteur (T_RXi) ayant rétrodiffusé ledit flux de données (SR) ; et **en ce que** :
- ladite corrélation est une corrélation spatiale.

3. Procédé de corrélation d'évènements (EVi, EVj) selon la revendication 1 ou 2 **caractérisé en ce que** :
- le marqueur (TAGi) représentatif de la rétrodiffusion de chacun (TAGi) desdits flux de données (SR, SRj) comporte une information temporelle (Ti) représentative de l'instant de rétrodiffusion dudit flux de données (SRi) ; et **en ce que** :
- ladite corrélation est une corrélation temporelle.

4. Procédé de corrélation d'évènements (EVi, EVj) selon l'une quelconque des revendications 1 à 3 **caractérisé en ce que** :
- le marqueur (TAGi) représentatif de la rétrodiffusion de chacun (TAGi) desdits flux de données (SRi, SRj) comporte une information spatiale (LOCi) représentative de la localisation du dispositif transmetteur (T_RXi) ayant rétrodiffusé ledit flux de données (SRi) ; et **en ce que** :
- ladite corrélation est une corrélation spatiale.

5. Système (10) de corrélation d'évènements (EVi, EVj) comportant :
- au moins un module de réception (M30) configuré pour recevoir une pluralité de flux de données (SRi, SRj), chacun desdits flux (SRi) ayant été émis (E10) par une source (SOi) et comportant des données représentatives d'un événement (EVi) acquis par ladite source (SOi) au moment de ladite émission et un marqueur (TAGi) représentatif de la rétrodiffusion (E20) dudit flux de données (SRi) par un dispositif transmetteur (D_TXi) ; et
- un module (M70) de corrélation configuré pour déterminer une corrélation spatiale et/ou temporelle desdits événements (EVi, EVj) à partir desdits marqueurs (TAGi, TAGj).

6. Système de corrélation d'évènements selon la revendication 5, **caractérisé en ce qu'**il est incorporé dans un dispositif de télécommunication (BS).

7. Système de corrélation d'évènements selon la revendication 5, **caractérisé en ce qu'**il comporte:
- au moins un dispositif de télécommunication (BS) comportant ledit au moins un module de réception (M30) ; et
- un dispositif de corrélation (DCO), distinct dudit au moins un dispositif de télécommunication (BS), et comportant ledit module (M70) de corrélation.

8. Système de corrélation d'évènements selon la revendication 6 ou 7, **caractérisé en ce que** ledit dispositif de télécommunication (BS) est une station de base.

9. Système de corrélation d'évènements (10) selon l'une quelconque des revendications 5 à 8, dans lequel ledit au moins un dispositif transmetteur (D_TXi) comporte :
- un module de géolocalisation de ce dispositif transmetteur,
- une horloge, et
- un module (M20) de marquage du flux de données (SDi) véhiculé par le signal ambiant rétrodiffusé par le dispositif transmetteur avec un marqueur (TAGi) représentatif d'une localisation (LOCi) dudit dispositif transmetteur (D_TXi) ou d'un instant (Ti) de rétrodiffusion dudit flux de données (SDi) par ledit dispositif transmetteur (D_TXi), dans lequel :
- ladite localisation (LOCi) est obtenue à partir dudit module de géolocalisation, ; et
- ledit instant de rétrodiffusion est obtenu à partir de ladite horloge.

10. Programme d'ordinateur (PROGC) comportant des instructions pour la mise en œuvre d'un procédé de corrélation d'événements selon l'une quelconque des revendications 1 à 4 lorsque ledit programme est exécuté par un ordinateur.

11. Support d'enregistrement (23) lisible par un ordinateur sur lequel est enregistré un programme d'ordinateur selon la revendication 10.

## Patentansprüche

1. Verfahren zur Korrelation von Ereignissen (EVi, EVj), das folgende Schritte umfasst:
- Empfangen (E30) einer Vielzahl von Datenströmen (SRi, SRj), wobei jeder der Ströme (SRi) von einer Quelle (SOi) gesendet wurde (E10) und Daten, die für ein Ereignis (EVi), das von der Quelle (SOi) in dem Moment des Sendens erfasst wurde, repräsentativ sind, und einen Marker (TAGi), der für die Rückstreuung (E20) des Datenstroms (SRi) durch eine Übertragungsvorrichtung (D_TXi) repräsentativ ist, umfasst; und
- Bestimmen (E70) einer räumlichen und/oder zeitlichen Korrelation der Ereignisse (EVi, EVj) anhand der Marker (TAGi, TAGj).

2. Verfahren zur Korrelation von Ereignissen (EVi, EVj) nach Anspruch 1, **dadurch gekennzeichnet, dass**:
- der Marker (TAGi), der für die Rückstreuung jedes (TAGi) der Datenströme (SRi, SRj) repräsentativ ist, eine Kennung (IDi) der Übertragungsvorrichtung (T_RXi), die den Datenstrom (SR) zurückgestreut hat, umfasst; und dass:
- die Korrelation eine räumliche Korrelation ist.

3. Verfahren zur Korrelation von Ereignissen (EVi, EVj) nach Anspruch 1 oder 2, **dadurch gekennzeichnet, dass**:
- der Marker (TAGi), der für die Rückstreuung jedes (TAGi) der Datenströme (SR, SRj) repräsentativ ist, eine zeitliche Information (Ti) umfasst, die für den Zeitpunkt der Rückstreuung des Datenstroms (SRi) repräsentativ ist; und dass:
- die Korrelation eine zeitliche Korrelation ist.

4. Verfahren zur Korrelation von Ereignissen (EVi, EVj) nach einem der Ansprüche 1 bis 3, **dadurch gekennzeichnet, dass**:
- der Marker (TAGi), der für die Rückstreuung jedes (TAGi) der Datenströme (SRi, SRj) repräsentativ ist, eine räumliche Information (LOCi) umfasst, die für den Standort der Übertragungsvorrichtung (T_RXi), die den Datenstrom (SRi) zurückgestreut hat, repräsentativ ist; und dass:
- die Korrelation eine räumliche Korrelation ist.

5. System (10) zur Korrelation von Ereignissen (EVi, EVj), umfassend:
- mindestens ein Empfangsmodul (M30), das dazu konfiguriert ist, eine Vielzahl von Datenströmen (SRi, SRj) zu empfangen, wobei jeder der Ströme (SRi) von einer Quelle (SOi) gesendet wurde (E10) und Daten, die für ein Ereignis (EVi), das von der Quelle (SOi) in dem Moment des Sendens erfasst wurde, repräsentativ sind, und einen Marker (TAGi), der für die Rückstreuung (E20) des Datenstroms (SRi) durch eine Übertragungsvorrichtung (D_TXi) repräsentativ ist, umfasst; und
- ein Korrelationsmodul (M70), das dazu konfiguriert ist, eine räumliche und/oder zeitliche Korrelation der Ereignisse (EVi, EVj) anhand der Marker (TAGi, TAGj) zu bestimmen.

6. System zur Korrelation von Ereignissen nach Anspruch 5, **dadurch gekennzeichnet, dass** es in eine Telekommunikationsvorrichtung (BS) integriert ist.

7. System zur Korrelation von Ereignissen nach Anspruch 5, **dadurch gekennzeichnet, dass** es Folgendes umfasst:
- mindestens eine Telekommunikationsvorrichtung (BS), die das mindestens eine Empfangsmodul (M30) umfasst; und
- eine Korrelationsvorrichtung (DCO), die sich von der mindestens einen Telekommunikationsvorrichtung (BS) unterscheidet und das Korrelationsmodul (M70) umfasst.

8. System zur Korrelation von Ereignissen nach Anspruch 6 oder 7, **dadurch gekennzeichnet, dass** die Telekommunikationsvorrichtung (BS) eine Basisstation ist.

9. System zur Korrelation von Ereignissen (10) nach einem der Ansprüche 5 bis 8, wobei die mindestens eine Übertragungsvorrichtung (D_TXi) Folgendes umfasst:
- ein Modul zur Geolokalisierung dieser Übertragungsvorrichtung,
eine Uhr und
ein Modul (M20) zur Markierung des Datenstroms (SDi), der durch das durch die Übertragungsvorrichtung zurückgestreute Umgebungssignal transportiert wird, mit einem Marker (TAGi), der für einen Standort (LOCi) der Übertragungsvorrichtung (D_TXi) oder einen Zeitpunkt (Ti) der Rückstreuung des Datenstroms (SDi) durch die Übertragungsvorrichtung (D_TXi) repräsentativ ist,
wobei:
- der Standort (LOCi) anhand des Geolokalisierungsmoduls erhalten wird; und
- der Zeitpunkt der Rückstreuung anhand der Uhr erhalten wird.

10. Computerprogramm (PROGC), das Anweisungen umfasst, die bei Ausführung des Programms durch einen Computer ein Verfahren zur Korrelation von Ereignissen nach einem der Ansprüche 1 bis 4 ausführen.

11. Computerlesbares Speichermedium (23), auf dem ein Computerprogramm nach Anspruch 10 gespeichert ist.

## Claims

1. Method for correlating events (EVi, EVj) comprising steps of:
- receiving (E30) a plurality of data streams (SRi, SRj), each of said streams (SRi) having been emitted (E10) by a source (SOi) and comprising data representative of an event (EVi) acquired by said source (SOi) at the time of said emission and a marker (TAGi) representative of the backscattering (E20) of said data stream (SRi) by a transmitter device (D_TXi); and
- determining (E70) a spatial and/or temporal correlation between said events (EVi, EVj) from said markers (TAGi, TAGj).

2. Method for correlating events (EVi, EVj) according to Claim 1, **characterized in that**:
- the marker (TAGi) representative of the backscattering of each (TAGi) of said data streams (SRi, SRj) comprises an identifier (IDi) of the transmitter device (T_RXi) having backscattered said data stream (SR); and **in that**:
- said correlation is a spatial correlation.

3. Method for correlating events (EVi, EVj) according to Claim 1 or 2, **characterized in that**:
- the marker (TAGi) representative of the backscattering of each (TAGi) of said data streams (SR, SRj) comprises temporal information (Ti) representative of the time of backscattering of said data stream (SRi); and **in that**:
- said correlation is a temporal correlation.

4. Method for correlating events (EVi, EVj) according to any one of Claims 1 to 3, **characterized in that**:
- the marker (TAGi) representative of the backscattering of each (TAGi) of said data streams (SRi, SRj) comprises spatial information (LOCi) representative of the location of the transmitter device (T_RXi) having backscattered said data stream (SRi); and **in that**:
- said correlation is a spatial correlation.

5. System (10) for correlating events (EVi, EVj) comprising:
- at least one receiving module (M30) configured to receive a plurality of data streams (SRi, SRj), each of said streams (SRi) having been emitted (E10) by a source (SOi) and comprising data representative of an event (EVi) acquired by said source (SOi) at the time of said emission and a marker (TAGi) representative of the backscattering (E20) of said data stream (SRi) by a transmitter device (D_TXi); and
- a correlation module (M70) configured to determine a spatial and/or temporal correlation between said events (EVi, EVj) from said markers (TAGi, TAGj).

6. System for correlating events according to Claim 5, **characterized in that** it is incorporated into a telecommunication device (BS).

7. System for correlating events according to Claim 5, **characterized in that** it comprises:
- at least one telecommunication device (BS) comprising said at least one receiving module (M30); and
- a correlation device (DCO), distinct from said at least one telecommunication device (BS), and comprising said correlation module (M70).

8. System for correlating events according to Claim 6 or 7, **characterized in that** said telecommunication device (BS) is a base station.

9. System for correlating events (10) according to any one of Claims 5 to 8, wherein said at least one transmitter device (D_TXi) comprises:
- a geolocation module of this transmitter device,
a clock, and
a module (M20) for marking the data stream (SDi) conveyed by the ambient signal backscattered by the transmitter device with a marker (TAGi) representative of a location (LOCi) of said transmitter device (D_TXi) or of a time (Ti) of backscattering of said data stream (SDi) by said transmitter device (D_TXi), wherein:
- said location (LOCi) is obtained from said geolocation module; and
- said time of backscattering is obtained from said clock.

10. Computer program (PROGC) comprising instructions for implementing a method for correlating events according to any one of Claims 1 to 4 when said program is executed by a computer.

11. Computer-readable storage medium (23) on which a computer program according to Claim 10 is stored.
